# EUROPÄISCHE PATENTSCHRIFT

(11) **EP 1 508 269 B1**
(45) Veröffentlichungstag und Bekanntmachung des Hinweises auf die Patenterteilung: **11.10.2006**
(21) Anmeldenummer: 03405609.3
(22) Anmeldetag: 20.08.2003
(51) Int. Cl.: A01G 25/02

(54) **Bohreinrichtung für Tropfbewässerungsrohre**
Drilling assembly for drip irrigation tubes
Dispositifs de perçage pour des tuyaux d'irrigation goutte par goutte

(43) Veröffentlichungstag der Anmeldung: 23.02.2005
(73) Patentinhaber: Kertscher, Eberhard, 1462 Yvonand (CH)
(72) Erfinder: Kertscher, Eberhard, 1462 Yvonand (CH); Bernauer, Thomas, 2000 Neuchâtel (CH)
(74) Vertreter: BOVARD AG

(56) Entgegenhaltungen:
- EP-A- 0 715 926
- EP-A- 0 881 025
- EP-A- 1 192 853
- WO-A-02/092274
- US-A- 4 095 084
- US-A- 4 254 916
- US-A- 5 324 371
- US-B1- 6 423 932

## Beschreibung

Die vorliegende Erfindung bezieht sich auf eine Bohreinrichtung für Tropfbewässerungsrohre, umfassend Bohrmittel, die an einem Rahmengestell angeordnet sind, Vorschubmittel, mit welchen die extrudierten und mit Dosierelementen versehenen Tropfbewässerungsrohre zu den Bohrmitteln zum Anbringen der Bohrungen in den Rohrkörper im Bereich der Dosierelemente zuführbar und danach wegführbar sind, Sensormittel zum Feststellen der Position der Dosierelemente im Rohrkörper sowie Steuermittel zum Steuern des Bohrvorgangs.

Mit derartigen Tropfbewässerungsrohren kann eine direkte Bewässerung von Pflanzen erreicht werden. Diese Tropfbewässerungsrohre werden so hergestellt und ausgelegt, dass zum Beispiel sich im Bereich jeder Pflanze ein Dosierelement befindet, durch welche das Wasser über eine Bohrung aus dem Tropfbewässerungsrohr tropfweise ausgelassen wird. Dadurch wird jede der einzelnen Pflanzen direkt bewässert, der Wassergebrauch ist sehr sparsam. Insbesondere wird vermieden, dass eine grosse Menge des Wassers zur Bewässerung verdunstet, wie dies üblicherweise bei Bewässerungsanlagen geschieht, durch welche über Spritzanlagen das Wasser grossflächig verteilt wird. Mit der Tropfbewässerung über diese Tropfbewässerungsrohre wird somit eine sehr wirtschaftliche Bewässerung erreicht.

Bohreinrichtungen für Tropfbewässerungsrohre, mit welchen in die Rohrwandung im Bereich der Dosierelemente zur Ermöglichung des Austrittes von Wasser aus dem Rohrkörper Bohrungen angebracht werden, sind bekannt. So zeigt beispielsweise die EP-A-715 926 eine derartige Einrichtung. Nach dem Extrudieren des Rohres und dem Einsetzen der Dosierelemente in diesem Rohr läuft das Rohr an einem berührungslosen Sensor vorbei, mit welchem der Beginn und/oder das Ende eines Dosierelementes festgestellt werden kann. Nach dem Durchlauf des Sensors wird das Rohr durch eine Bohreinrichtung gezogen, und zwar mit einer Zieheinrichtung, die hinter der Bohreinrichtung angeordnet ist. Aufgrund des vom Sensor abgegebenen Signals und bei Kenntnis der Geschwindigkeit des Vorlaufs des Rohres wird die entsprechende Bohreinrichtung aktiviert, das Loch wird gebohrt. Danach wird das Rohr in einer Wickelvorrichtung aufgewickelt.

Der Rohrkörper derartiger Tropfbewässerungsrohre wird beispielsweise auf der Basis von Polyethylen hergestellt. Insbesondere bei dünnwandigen Rohren, wie sie beispielsweise verwendet werden, wenn Einjahrespflanzen zu bewässern sind und die Tropfbewässerungsrohre oberflächlich verlegt werden und nach der einmaligen Anwendung ersetzt werden müssen, ist wegen der Elastizität eine Dehnung in Längsrichtung auf geringen Zug zu erwarten. Da bei der oben genannten bekannten Einrichtung zwischen dem Sensor, der Bohreinrichtung und der Abzugeinrichtung eine relativ grosse Distanz besteht, ist nicht ausgeschlossen, dass bei einem derartigen Rohr eine Längenänderung entsteht. Dies kann zur Folge haben, dass die Bohrung nicht an der richtigen Stelle im Bereich des Dosierelementes angebracht wird, wodurch das Rohr oder mindestens dieser Abschnitt unbrauchbar wird. Zudem ist es relativ schwierig, den Rohrkörper mit kreisrundem Querschnitt so zu führen, dass auf die Bearbeitungslänge keine Verdrehung stattfindet. Eine derartige Verdrehung hätte ebenfalls zur Folge, dass die Bohrung nicht an der richtigen Position im Bereich des Dosierelementes angebracht werden kann, mit den oben genannten Folgen.

Die Aufgabe der vorliegenden Erfindung besteht nun darin, eine Bohreinrichtung für Tropfbewässerungsrohre zu schaffen, bei welcher gewährleistet ist, dass die Bohrung in der richtigen Position im Bereich des Dosierelementes in den Rohrkörper eingebracht wird, sowohl bezüglich der Längsrichtung als auch bezüglich der Querrichtung.

Erfindungsgemäss erfolgt die Lösung dieser Aufgabe dadurch, dass im Rahmengestell eine Rolle angebracht ist, die um eine Drehachse drehbar ist, auf welche Rolle der nach dem Extrudieren und Einsetzen der Dosierelemente flach gepresste zugeführte Rohrkörper aufgelegt ist, die Rolle um mindestens einen Bereich umschlingt und danach weggeführt ist, dass im Umschlingungsbereich, in welchen der Rohrkörper auf der Rolle aufliegt, durch die Sensormittel die Position der Dosiermittel im Rohrkörper feststellbar und über die Bohrmittel die Bohrungen anbringbar sind.

Durch die Flachpressung oder kurzfristige Verformung des Rohrkörpers nach dem Extrudieren und dem Einsetzen der Dosierelemente ist gewährleistet, dass sich der Rohrkörper während des Weiterverarbeitungsvorgangs nicht verdrehen kann, der Rohrkörper weist im wesentlichen die Form eines Bandes auf, das in optimaler Weise geführt werden kann. Indem der Rohrkörper die Rolle der Bohreinrichtung in mindestens einem Bereich umschlingt, wobei in diesem Umschlingungsbereich sowohl die Sensormittel die Position der Dosiermittel im Rohrkörper feststellen und durch die Bohrmittel die Bohrungen anbringbar sind, wird vermieden, dass eine Längenänderung infolge Dehnung des Rohrkörpers auftreten kann, die Bohrungen können somit sehr genau angebracht werden.

In vorteilhafter Weise sind am Rahmengestell der erfindungsgemässen Bohreinrichtung zwei Umlenkrollen angebracht, derart, dass der Rohrkörper im einen Randbereich der Rolle auf die Rolle eingeführt ist, danach um die erste Umlenkrolle gelegt ist, von da den mittleren Bereich der Rolle erreicht, auf welchem er einen mittleren Umschlingungsbereich bildet, um die zweite Umlenkrolle geführt ist und auf den anderen Randbereich der Rolle gelangt und aus der Bohreinrichtung ausgeführt ist. Mit dieser Anordnung wird erreicht, dass der mittlere Umschlingungsbereich im wesentlichen bei etwa 180° liegt, dass der Rohrkörper geführt über die Rolle und die erste Umlenkrolle in diesen mittleren Umschlingungsbereich gebracht wird und entsprechend geführt wieder weitergeleitet wird. Durch die lange Auflage des Rohrkörpers auf der Rolle wird eine Längenveränderung während des Bearbeitungsvorgangs in der Bohreinrichtung eliminiert. Zudem wird der Rohrkörper in gleich bleibender Richtung aus der Bohreinrichtung weggeführt, wie er eingeführt worden ist. Dadurch ergeben sich keine Platzprobleme für weitere Bearbeitungsstationen.

Zum Optimieren des Kontaktes zwischen der Rolle und dem Rohrkörper kann die Oberfläche der Rolle mit einer rutschfesten Schicht versehen sein.

Um die optimalen Umschlingungsbedingungen des Rohrkörpers um die Rolle nutzen zu können, sind die Sensormittel und die Bohrmittel in der Bohreinrichtung so angeordnet, dass sie auf den mittleren Umschlingungsbereich des Rohrkörpers auf der Rolle ausgerichtet sind.

Eine vorteilhafte Ausgestaltung der Erfindung besteht darin, dass die Sensormittel aus einem Tastkontakt bestehen, welcher frei drehbar auf einem Schwenkhebel angebracht ist und auf dem Rohrkörper aufliegt, welcher Schwenkhebel beim Durchlauf jeweils eines im Rohrkörper angebrachten Dosierelementes unter dem Tastkontakt eine Schwenkbewegung ausführt und dadurch ein Signal auslöst, das an die Steuermittel leitbar ist. Das Dosierelement bildet im Rohrkörper eine Erhebung, die aussenseitig feststellbar ist. Durch die Wölbung der Oberfläche der Rolle und die Steifigkeit des im Rohrkörper angebrachten Dosierelementes tritt das vordere und das hintere Ende des Dosierelementes noch stärker aus dem Rohrkörper hervor, wodurch die Schwenkbewegung des Schwenkhebels durch den Tastkontakt noch ausgeprägter wird und die Position des Dosierelementes im Rohrkörper exakt feststellbar ist.

Eine weitere vorteilhafte Ausgestaltung der Erfindung besteht darin, dass die Bohrmittel Einrichtungen zur Aufbereitung und Übertragung von Laserstrahlen sind, welche Einrichtungen in Vorlaufrichtung des Rohrkörpers gesehen hinter den Sensormitteln am Rahmengestell angeordnet sind.

Eine weitere vorteilhafte Ausgestaltung der Erfindung besteht darin, dass in Vorlaufrichtung des Rohrkörpers gesehen hinter den Bohrmitteln Kontrollmittel angebracht sind, mit welchen die Position der im Rohrkörper angebrachten Bohrungen bezüglich der Dosierelemente kontrollierbar sind. Mit diesen Kontrollmitteln ist eine optimale Qualität der so hergestellten Tropfbewässerungsrohre gewährleistet.

Eine Ausführungsform der vorliegenden Erfindung wird nachfolgend anhand der beiliegenden Zeichnung beispielhaft näher erläutert.

Es zeigt:
Fig. 1 in schematischer Darstellung eine erfindungsgemässe Bohreinrichtung, wobei vor und hinter dieser Bohreinrichtung jeweils eine Zugeinrichtung angeordnet ist;
Fig. 2 in räumlicher Darstellung die Anordnung der Rolle und der Umlenkrollen in der Bohreinrichtung sowie die Führung des Rohrkörpers über diese Rolle und die Umlenkrollen;
Fig. 3 eine Ansicht von vorn auf die Rolle und die Umlenkrollen der Bohreinrichtung;
Fig. 4 eine Frontansicht auf die erfindungsgemässe Bohreinrichtung mit der Anordnung der Bohrmittel, der Sensormittel und der Kontrollmittel;
Fig. 5 eine Ansicht auf die Bohrmittel, die Sensormittel und die Kontrollmittel; und
Fig. 6 in räumlicher Darstellung einen Ausschnitt eines Tropfbewässerungsrohres.

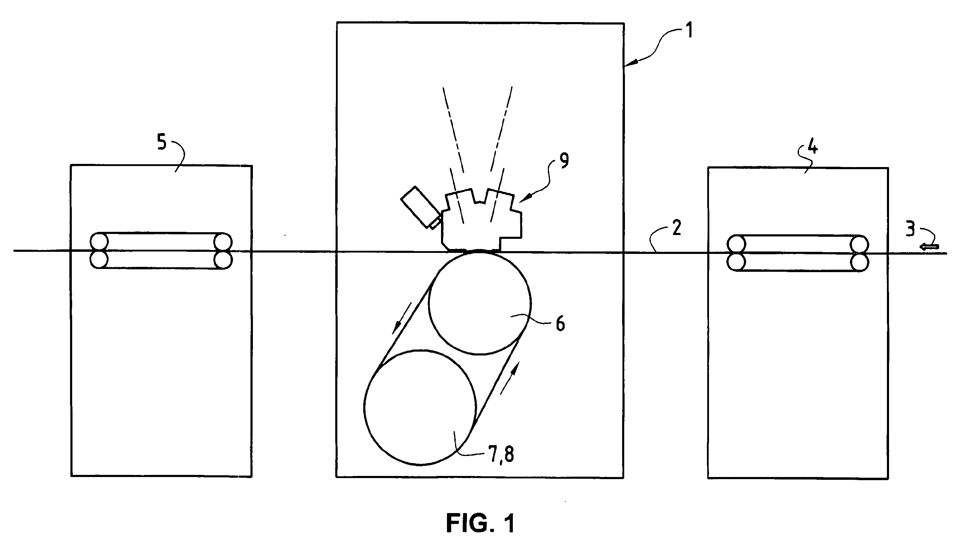

Wie aus Fig. 1 ersichtlich ist, wird der flachgepresste Rohrkörper 2 kontinuierlich einer Bohreinrichtung 1 zugeführt, in Richtung des Pfeiles 3. Hierbei durchläuft der Rohrkörper 2 eine erste Vorschubeinrichtung 4, wird danach durch die Bohreinrichtung 1 geführt und über eine zweite Vorschubeinrichtung 5 aus der Bohreinrichtung 1 weggeführt. Die Vorschubgeschwindigkeiten dieser Vorschubeinrichtungen 4 und 5 sind so gewählt, dass in der Bohreinrichtung 1 der Rohrkörper 2 in optimaler Weise gespannt ist. Wie später noch beschrieben wird, umläuft der in die Bohreinrichtung 1 zugeführte Rohrkörper 2 eine Rolle 6 und Umlenkrollen 7 und 8, und wird so an den Bohrmitteln 9 vorbeigeführt.

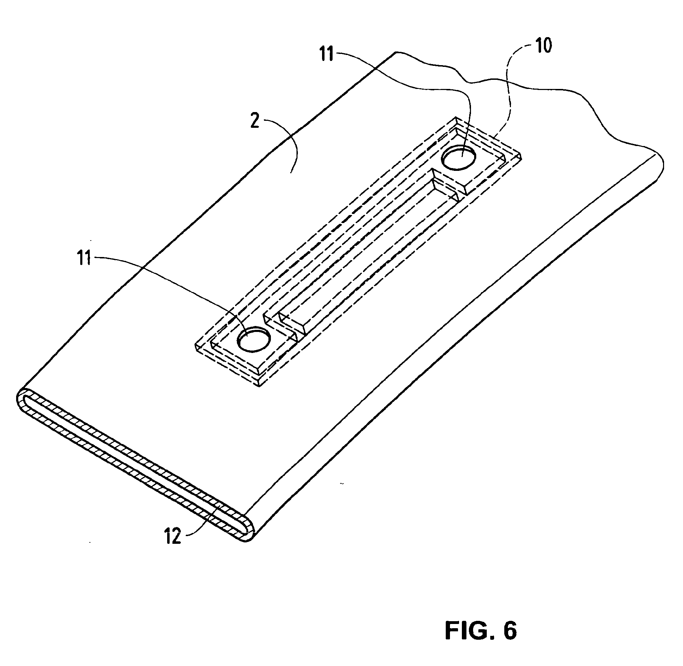

In bekannter Weise wird der Rohrkörper 2, wie er in Fig. 6 dargestellt ist, durch einen Extrusionsvorgang erhalten, wobei die Dosierelemente 10 eingesetzt werden. Der Rohrkörper 2 wird dann zusammengepresst, so dass der Rohrkörper 2 bandförmig ausgebildet ist. Dieses Zusammenpressen erfolgt unmittelbar nach dem Extrusionsvorgang und dem Einsetzen der Dosierelemente 10 in den Rohrkörper 2, dadurch ist gewährleistet, dass die Dosierelemente 10 innerhalb des Rohrkörpers 2 in Längsrichtung immer mittig angeordnet sind. Während des Durchlaufs des Rohrkörpers 2 durch die Bohreinrichtung 1 (Fig. 1), was beispielsweise mit einer Geschwindigkeit von etwa 3 m/s erfolgt, werden die Bohrungen 11 in der Wandung 12 des Rohrkörpers 2 angebracht, durch welche dann im Einsatz zum Bewässern das Wasser tröpfchenweise austreten kann. Der Rohrkörper 2 besteht beispielsweise aus Polyäthylen, die Wandung 12 des Rohrkörpers 2 hat beispielsweise eine Dicke von etwa 0,1 bis 2 mm, im Bewässerungsvorgang wird der Rohrkörper durch den Druck des Wassers im Innern aufgedrückt, er erhält somit eine praktisch runde Querschnittform.

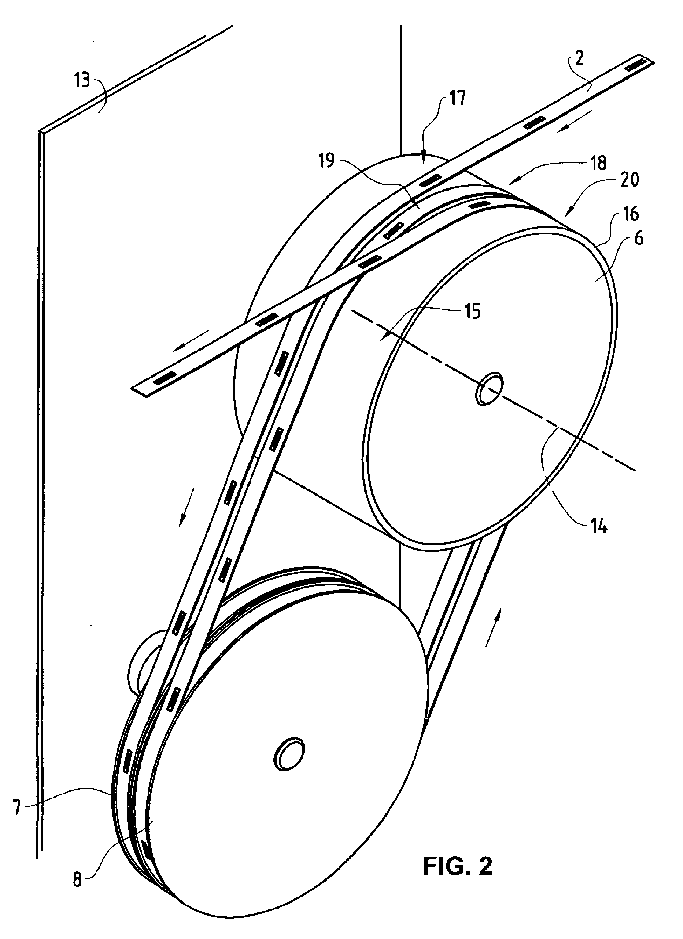

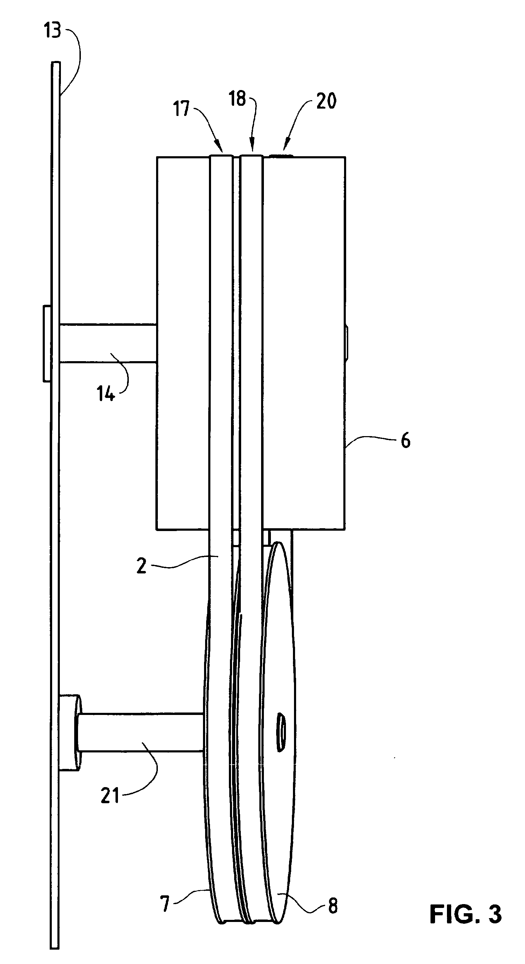

Fig. 2 zeigt die Anordnung der Rolle 6 und der Umlenkrollen 7 und 8 am Rahmengestell 13 der Bohreinrichtung 1. Die Rolle ist um eine Drehachse 14 drehbar, weist eine zylinderförmige Oberfläche 15 auf und hat eine Breite, die einem Mehrfachen der Breite des Rohrkörpers 2 entspricht. Die zylinderförmige Oberfläche 15 der Rolle 6 kann mit einer rutschfesten Schicht 16 versehen sein, beispielsweise aus Gummi. Der Rohrkörper 2 wird im hier dargestellten Ausführungsbeispiel in einem hinteren Randbereich 17 der Rolle 6 auf die Rolle 6 eingeführt. Der Rohrkörper wird umgelenkt und ist um die erste Umlenkrolle 7 gelegt. Von hier gelangt der Rohrkörper zurück auf die Rolle 6, wobei wegen der Schrägstellung der ersten Umlenkrolle 7, wie dies aus Fig. 3 ersichtlich ist, der Rohrkörper auf einen mittleren Bereich 18 der Rolle 6 gelangt und einen mittleren Umschlingungsbereich 19 bildet. Von hier gelangt der Rohrkörper auf die zweite Umlenkrolle 8, wird hier umgelenkt und ebenfalls wegen der Schrägstellung dieser zweiten Umlenkrolle 8, wie dies aus Fig. 3 ersichtlich ist, auf den vorderen Randbereich 20 der Rolle 6 zurückgeführt. Danach wird der Rohrkörper aus der Rolle 6 weggeführt und gelangt in die zweite Vorschubeinrichtung 5, wie dies aus Fig. 1 ersichtlich ist.

Die Rolle 6 wird durch den durch die Vorschubeinrichtungen 4 und 5 gezogenen Rohrkörper 2 angetrieben, so dass der Rohrkörper 1 beim Durchlauf dieser beiden Vorschubeinrichtungen 4 und 5 und der Rolle 6 und den beiden Umlenkrollen 7 und 8 optimal gespannt ist. Die beiden Umlenkrollen 7 und 8 können hierbei frei drehbar auf der Achse 21 gelagert sein.

Mit dieser Anordnung wird erreicht, dass der Rohrkörper 2 völlig unverrutschbar auf der Rolle 6 aufliegt, insbesondere im mittleren Umschlingungsbereich 19. Der Rohrkörper 2 erfährt hier somit absolut keine Längenänderung, obwohl er aus einem an sich elastischen Material gebildet ist.

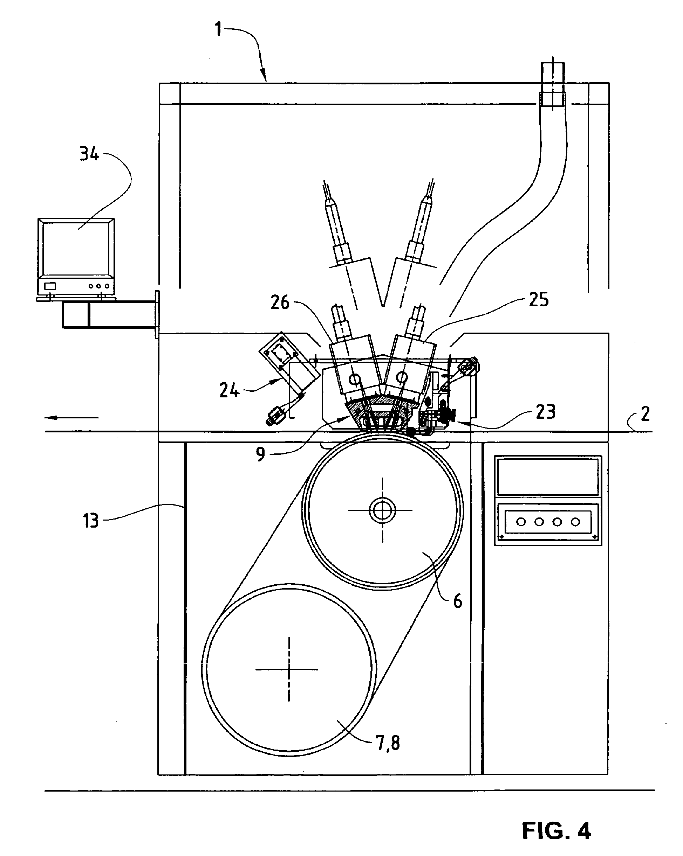

Wie aus Fig. 4 ersichtlich ist, sind die Bohrmittel 9, die Sensormittel 23 und die Kontrollmittel 24 so am Rahmengestell 13 der Bohreinrichtung 1 angeordnet, dass sie auf den mittleren Umschlingungsbereich 19 (Fig. 2 und 3) ausgerichtet sind. Die Bohrmittel 9 bestehen aus einer ersten Einrichtung 25 und einer zweiten Einrichtung 26 zum Erzeugen von Laserstrahlen. Bohrmittel 9, Sensormittel 23 und Kontrollmittel 24 sind in bekannter, nicht dargestellter Weise mit in der Bohreinrichtung 1 angeordneten Steuermitteln verbunden.

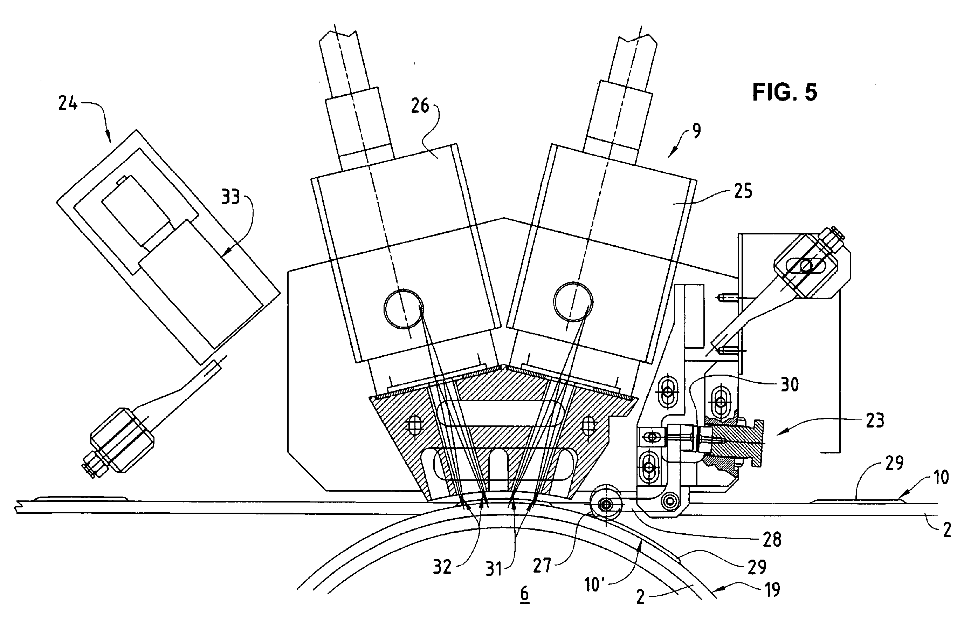

Fig. 5 zeigt in vergrösserter Darstellung die Anordnung der Bohrmittel 9, der Sensormittel 23 und der Kontrollmittel 24. Die Sensormittel 23 umfassen einen Tastkontakt 27, der hier als Tastrolle ausgebildet ist, der frei drehbar auf einem Schwenkhebel 28 angeordnet ist. Es könnte aber auch ein Schleifkontakt verwendet werden. Diese Tastrolle 27 liegt auf dem Rohrkörper 2, der den mittleren Umschlingungsbereich 19 (Fig. 2 und 3) bildet, auf. Die in den Rohrkörper 2 eingesetzten Dosierelemente 10 bilden in der Oberfläche der Rohrwandung eine Erhöhung 29. Insbesondere im mittleren Umschlingungsbereich 19 erheben sich die Vorderkante und die Hinterkante des Dosierelementes 10 wegen der Krümmung der Oberfläche der Rolle 6 noch weiter aus der Oberfläche des Rohrkörpers 2.

Beim Durchlauf eines derartigen Dosierelementes 10' im Bereich der Tastrolle 27 der Sensormittel 23 wird diese durch die Vorderkante der Erhebung 29 angehoben. Dies bewirkt ein Verschwenken des Schwenkhebels 28, am der Tastrolle 27 abgewandten Endbereich dieses Schwenkhebels 28 ist ein Sensor 30 angebracht, mit welchem die Verschwenkung feststellbar ist und welcher ein Signal an die Steuermittel der Bohreinrichtung 1 abgibt. Mit diesen Sensormitteln 23 kann somit genau festgestellt werden, wenn ein Dosierelement 10 im Rohrkörper angeordnet ist.

In genau vorgegebenem Abstand von der Tastrolle 27 ist die erste Einrichtung 25 und die zweite Einrichtung 26 zur Aufbereitung und Übertragung von Laserstrahlen angeordnet. Mit diesen Einrichtungen 25 und 26 werden die Bohrungen 11 in der Wandung 12 des Rohrkörpers 2 angebracht, wie diese in Fig. 6 dargestellt sind.

In bekannter Weise ist die Rolle 6 mit einem Inkrementalgeber ausgestattet, nach der Abgabe eines Signals durch die Sensormittel 23 an die Steuermittel wird eine genau vorgegebene Anzahl von Inkrementalschritten zurückgelegt, wonach die erste Einrichtung 25 und die zweite Einrichtung 26 zur Aufbereitung und Übertragung der Laserstrahlen aktiviert werden. Da im vorliegenden Ausführungsbeispiel pro Dosierelement 10 zwei Bohrungen 11 anzubringen sind, werden diese gleichzeitig gebohrt. Selbstverständlich ist es auch denkbar, dass Dosierelemente mit nur einer Bohrung angebracht sind, es wird dann nur eine der beiden Einrichtungen 25 und 26 aktiviert.

Zusätzlich wird noch die Vorschubgeschwindigkeit des Rohrkörpers 2 bzw. die Drehgeschwindigkeit der Rolle 6 gemessen. Dies wird dazu benützt, dass die Laserstrahlen 31 und 32 der ersten Einrichtung 25 und der zweiten Einrichtung 26 während des Bohrvorgangs mit dem vorlaufenden Rohrkörper 2 mitlaufen können. Hierzu sind in bekannter Weise Spiegel vorgesehen, die während des Bohrvorgangs synchron zur Vorschubgeschwindigkeit des Rohrkörpers 2 verschwenkt werden, wodurch die Laserstrahlen 31 und 32 mitlaufend sind. In der Fig. 5 ist von den Laserstrahlen 31 und 32 jeweils die vordere und hintere Endlage schematisch dargestellt. Die Laserstrahlen sind in bekannter Weise so lange wirksam, bis die Rohrwandung durchbohrt ist, ohne dass die darunter angeordneten Dosierelemente 10 zerstört werden.

Die Einrichtungen 25 und 26 zur Erzeugung von Laserstrahlen sind beispielsweise des Typs Nd/YAG oder CO₂. Selbstverständlich wäre es auch denkbar, andere geeignete Lasertypen zu verwenden.

Nach dem Anbringen der Bohrungen im Rohrkörper 2 im Bereich der Dosierelemente 10 werden diese durch die Kontrollmittel 24 kontrolliert. Diese Kontrollmittel bestehen im vorliegenden Ausführungsbeispiel aus einer Kamera 33, mit welcher von jedem durchlaufenden Dosierelement 10 mit den angebrachten Bohrungen 11 ein Bild festgehalten wird. Dieses festgehaltene Bild entspricht im wesentlichen der Abbildung, wie sie in Fig. 6 dargestellt ist. Die Erhebungen 29, die durch das Dosierelement 10 in der Wandung 12 des Rohrkörpers 2 gebildet werden, bilden einen relativ scharfen Umriss, der im festgehaltenen Bild klar erkennbar ist, die Positionen der Bohrungen 11 können dann bezüglich des Dosierelementes in diesem Bild genau erkannt werden. Das so erhaltene Bild wird den Steuermitteln zugeführt, es wird dann festgestellt, ob die Positionen der Bohrungen 11 korrekt sind. Die festgehaltenen Bilder können zusätzlich auf einem Bildschirm 34 (Fig. 4) zur Visualisierung dargestellt werden.

Wenn eine Abweichung der Position der Bohrungen 11 bezüglich der Dosierelemente 10 festgestellt wird, kann eine automatische Justierung ausgeführt werden.

Mit dieser erfindungsgemässen Bohreinrichtung können in sehr genauer Weise die Bohrungen in die Wandung eines Rohrkörpers im Bereich der Dosierelemente eingebracht werden, bei kontinuierlichem Vorschub des Rohrkörpers. Zwischen dem Feststellen des Vorhandenseins eines Dosierelementes im Rohrkörper durch die Sensormittel bis zu den Bohrmitteln erfolgt absolut keine Längenänderung des an sich längselastischen Rohrkörpers, dadurch kann die Bohrung sehr genau erfolgen. Durch das Feststellen des Vorhandenseins eines Dosierelementes durch die Sensormittel und das anschliessende Anbringen der Bohrungen spielt es keine Rolle, welchen Abstand die hintereinander angeordneten Dosierelemente im Rohrkörper haben, dieser kann somit unterschiedlich sein. Dadurch können Tropfbewässerungsrohre hergestellt werden, die die gestellten Anforderungen erfüllen, beispielsweise zum Bewässern von Obstbäumen in Obstplantagen werden Tropfbewässerungsrohre verwendet, die im Bereich der Bäume mehrere Dosierelemente nahe beieinander angeordnet haben, während dazwischen ein grösserer Abstand vorhanden ist.

## Patentansprüche

1. Bohreinrichtung für Tropfbewässerungsrohre, umfassend Bohrmittel (9), die an einem Rahmengestell (13) angeordnet sind, Vorschubmittel (4, 5), mit welchen die extrudierten und mit Dosierelementen (10) versehenen Tropfbewässerungsrohre zu den Bohrmitteln (9) zum Anbringen der Bohrungen (11) in den Rohrkörper (2) im Bereich der Dosierelemente (10) zuführbar und danach wegführbar sind, Sensormittel (23) zum Feststellen der Position der Dosierelemente (10) im Rohrkörper (2) sowie Steuermittel zum Steuern des Bohrvorgangs, **dadurch gekennzeichnet, dass** im Rahmengestell (13) eine Rolle (6) angebracht ist, die um eine Drehachse (14) drehbar ist, auf welche Rolle (6) der nach dem Extrudieren und Einsetzen der Dosierelemente (10) flachgepresste zugeführte Rohrkörper (2) aufgelegt ist, die Rolle (6) um mindestens einen Bereich (19) umschlingt und danach weggeführt ist, dass im Umschlingungsbereich (19), in welchem der Rohrkörper (2) auf der Rolle (6) aufliegt, durch die Sensormittel (23) die Position der Dosiermittel (10) im Rohrkörper (2) feststellbar und über die Bohrmittel (9) die Bohrungen (11) anbringbar sind.

2. Bohreinrichtung nach Anspruch 1, **dadurch gekennzeichnet, dass** die Rolle (6) eine zylinderförmige Oberfläche (15) aufweist und eine Breite hat, die einem mehrfachen der Breite des Rohrkörpers (2) entspricht.

3. Bohreinrichtung nach Anspruch 2, **dadurch gekennzeichnet, dass** zwei Umlenkrollen (7, 8) am Rahmengestell (13) angebracht sind, derart, dass der Rohrkörper (2) in einem Randbereich (17) der Rolle (6) auf die Rolle (6) eingeführt ist, danach um die erste Umlenkrolle (7) gelegt ist, von da den mittleren Bereich (18) der Rolle erreicht, auf welchem er einen mittleren Umschlingungsbereich (19) bildet, um die zweite Umlenkrolle (8) geführt ist und auf den anderen Randbereich (20) der Rolle (6) gelangt und aus der Bohreinrichtung (1) ausgeführt ist.

4. Bohreinrichtung nach einem der Ansprüche 1 bis 3, **dadurch gekennzeichnet, dass** die Oberfläche der Rolle (6) mit einer rutschfesten Schicht (16) versehen ist.

5. Bohreinrichtung nach Anspruch 3 oder 4, **dadurch gekennzeichnet, dass** die Sensormittel (23) und die Bohrmittel (9) in der Bohreinrichtung (1) so angeordnet sind, dass sie auf den mittleren Umschlingungsbereich (19) des Rohrkörpers (2) auf der Rolle (6) ausgerichtet sind.

6. Bohreinrichtung nach einem der Ansprüche 1 bis 5, **dadurch gekennzeichnet, dass** die Sensormittel (23) aus einem Tastkontakt (27) bestehen, welcher auf einem Schwenkhebel (28) angebracht ist und auf dem Rohrkörper (2) aufliegt, welcher Schwenkhebel (28) beim Durchlauf jeweils eines im Rohrkörper (2) angebrachten Dosierelementes (10) unter dem Tastkontakt (27) eine Schwenkbewegung ausführt und dadurch ein Signal auslöst, das an die Steuermittel leitbar ist.

7. Bohreinrichtung nach Anspruch, **dadurch gekennzeichnet, dass** die Bohrmittel (9) Einrichtungen (25, 26) zur Aufbereitung und Übertragung von Laserstrahlen sind, welche Einrichtungen (25, 26) in Vorlaufrichtung des Rohrkörpers (2) gesehen hinter den Sensormitteln (23) am Rahmengestell (13) angeordnet sind.

8. Bohreinrichtung nach Anspruch 6 oder 7, **dadurch gekennzeichnet, dass** der Bohrvorgang gesteuert durch die Steuermittel in Abhängigkeit des Signals, das die Steuermittel von den Sensormitteln (23) erhalten, auslösbar ist.

9. Bohreinrichtung nach Anspruch 7 oder 8, **dadurch gekennzeichnet, dass** die Einrichtungen (25, 26) zur Aufbereitung und Übertragung der Laserstrahlen so ausgebildet sind, dass die während des Bohrvorgangs auf den Rohrkörper (2) auftreffenden Laserstrahlen mit dem vorlaufenden Rohrkörper (2) mitlaufend sind.

10. Bohreinrichtung nach einem der Ansprüche 1 bis 9, **dadurch gekennzeichnet, dass** in Vorlaufrichtung des Rohrkörpers (2) gesehen hinter den Bohrmitteln (9) Kontrollmittel (24) angebracht sind, mit welchen die Position der im Rohrkörper (2) angebrachten Bohrungen (11) bezüglich der Dosierelemente (10) kontrollierbar und regelbar sind.

## Claims

1. Drilling apparatus for drip irrigation tubes, comprising drilling means (9), which are disposed on a framework (13), feeding means (4, 5) by means of which the extruded drip irrigation tubes provided with metering elements (10) are able to be fed to the drilling means (9) for making the holes (11) in the tube body (2) in the region of the metering elements (10) and thereafter be taken away therefrom, sensor means (23) for ascertaining the position of the metering elements (10) in the tube body (2), as well as control means for controlling the drilling operation, **characterised in that** a roller (6) rotatable about an axis of rotation (14) is affixed in the framework (13), on which roller (6) the tube body (2) supplied, pressed flat after extrusion and insertion of the metering elements (10), is laid, the roller (6) wraps around at least one area (19) and is then carried away, that in the wrap-around area (19) in which the tube body (2) rests upon the roller (6), the position of the metering means (10) in the tube body (2) is ascertainable by means of the sensor means (23), and the holes (11) are able to be made by the drilling means (9).

2. Drilling apparatus according to claim 1, **characterised in that** the roller (6) has a cylindrical surface (15) and a width which corresponds to several times the width of the tube body (2).

3. Drilling apparatus according to claim 2, **characterised in that** two guide rollers (7, 8) are installed to the framework (13) in such a way that the tube body (2) is introduced onto the roller (6) in a marginal area (17) of the roller (6), is then laid around the first guide roller (7), reaches from there the middle area (18) of the roller on which it forms a middle wrap-around area (19), is led around the second guide roller (8), and reaches the other marginal area (20) of the roller (6), and is led out of the drilling apparatus (1).

4. Drilling apparatus according to one of the claims 1 to 3, **characterised in that** the surface of the roller (6) is provided with a non-slip coating.

5. Drilling apparatus according to claim 3 or 4, **characterised in that** the sensor means (23) and the drilling means (9) are disposed in the drilling apparatus (1) such that they are aligned on the roller (6) on the middle wrap-around area (19) of the tube body (2).

6. Drilling apparatus according to one of the claims 1 to 5, **characterised in that** the sensor means (23) consist of a key contact (27) which is installed on a swivel lever (28) and rests upon the tube body (2), which swivel lever (28) carries out a swivel movement with passage, under the key contact, of each metering element (10) installed in the tube body (2), and thereby triggers a signal which is able to be transmitted to the control means.

7. Drilling apparatus according to one of the claims 1 to 6, **characterised in that** the drilling means (9) are facilities (25, 26) for preparing and transmitting laser beams, which facilities (25, 26) are disposed behind the sensor means (23) on the framework (13) as viewed in the direction of advance of the tube body (2).

8. Drilling apparatus according to claim 6 or 7, **characterised in that** the drilling operation is able to be triggered controlled by the control means dependent upon the signal which the control means (23) receive from the sensor means.

9. Drilling apparatus according to claim 7 or 8, **characterised in that** the facilities (25, 26) for preparing and transmitting the laser beams are designed such that the laser beams hitting the tube body (2) during the drilling operation move along with the advancing tube body (2).

10. Drilling apparatus according to one of the claims 1 to 9, **characterised in that** checking means (24) are installed behind the drilling means (9) as viewed in the direction of advance of the tube body (2), by means of which checking means the position of the holes (11) made in the tube body (2) are able to be checked and adjusted relative to the metering elements (10).

## Revendications

1. Dispositif de perçage pour tuyau d'irrigation au goutte-à-goutte, comprenant des moyens de perçage qui sont disposés sur un bâti (13), des moyens d'avance (4,5) avec lesquels les tuyaux d'irrigation au goutte-à-goutte extrudés et munis d'éléments de dosage (10) peuvent être amenés aux moyens de perçage (9) pour ménager les perçages (11) dans les corps tubulaires (2) dans la zone des éléments de dosage (10) et en être éloignés, des moyens à capteurs (23) pour détecter la position des éléments de dosage (10) dans le corps tubulaire (2) ainsi que des moyens de commande pour la commande de l'opération de perçage, **caractérisé en ce que** dans le bâti (13) est aménagée une poulie (6) qui est rotative autour d'un axe de rotation (14), poulie (6) sur laquelle est placé le corps tubulaire (2) amené, pressé à plat après l'extrusion et l'insertion des éléments de dosage (10), entoure la poulie (6) sur au moins une zone (19) et est ensuite éloigné de sorte que dans la zone d'enroulement (19) dans laquelle le corps tubulaire (2) repose sur la poulie (6) les moyens à capteur (23) peuvent détecter la position des moyens de dosage (10) dans le corps tubulaire (2) et **en ce que** les perçages (11) peuvent être appliqués par les moyens de perçage (9).

2. Dispositif de perçage selon la revendication 1, **caractérisé en ce que** la poulie (6) présente une surface cylindrique (15) et une largeur qui correspond à un multiple de la largeur du corps tubulaire (2).

3. Dispositif de perçage selon la revendication 2, **caractérisé en ce que** deux poulies de renvoi (7, 8) sont placées sur le bâti (13) de sorte que le corps tubulaire (2) est introduit sur la poulie (6) dans une zone de bordure (17) de la poulie (6), est ensuite placé autour de la première poulie de renvoi (7), de là atteint la zone médiane (18) de la poulie, zone sur laquelle il forme une zone médiane d'enroulement (17), est guidé autour de la seconde poulie de renvoi (8) et parvient à l'autre zone de bordure (20) de la poulie (6) et est sorti du dispositif de perçage (1).

4. Dispositif de perçage selon l'une des revendications 1 à 3, **caractérisé en ce que** la surface de la bobine (6) est munie d'une couche antidérapante (16).

5. Dispositif selon la revendication 3 ou 4, **caractérisé en ce que** les moyens à capteurs (23) et les moyens de perçage (9) sont disposés dans le dispositif de perçage (1) de sorte qu'ils sont alignés sur la poulie (6) sur la zone médiane d'enroulement (19) du corps tubulaire (2).

6. Dispositif de perçage selon l'une des revendications 1 à 5, **caractérisé en ce que** les moyens à capteur (23) se composent d'un contact palpeur (27) qui est logé sur un levier pivotant (28) et repose sur le corps tubulaire (2), ce levier pivotant (28) exécutant un mouvement pivotant au passage respectif d'un élément de dosage (10) placé dans le corps tubulaire (2) sous le contact palpeur (27) et déclenche alors un signal qui est envoyé aux moyens de commande.

7. Dispositif selon la revendication 6, **caractérisé en ce que** les moyens de perçage (9) sont des dispositifs (25, 26) pour la préparation et la transmission de rayon laser, dispositifs (25, 26) qui sont disposés sur le bâti (13), vu dans le sens d'avance du corps tubulaire (2), derrière les moyens à capteur (23).

8. Dispositif selon la revendication 6 ou 7, **caractérisé en ce que** l'opération de perçage commandée par les moyens de commande est déclenchable en fonction du signal que les moyens de commande ont obtenu des moyens á capteurs (23).

9. Dispositif selon la revendication 7 ou 8, **caractérisé en ce que** les dispositifs (25, 26) sont conçus pour la préparation et la transmission des rayons laser de sorte que les rayons laser faisant impact sur le corps tubulaire (2) pendant l'opération de perçage sont entraînés avec le corps de perçage (2) en avancement.

10. Dispositif de perçage selon l'une des revendications 1 à 9, **caractérisé en ce que** vu dans le sens d'avance du corps de perçage (2), des moyens de commande (24) sont disposés derrière les moyens de perçage (9) lesquels permettent de contrôler et de régler la position des perçages (11) ménagés dans le corps tubulaire (2) par rapport aux éléments de dosage (10).
